# FASCICULE DE BREVET EUROPEEN

(11) **EP 1 048 948 B1**
(45) Date de publication et mention de la délivrance du brevet: **13.08.2008**
(21) Numéro de dépôt: 00401109.4
(22) Date de dépôt: 20.04.2000
(51) Int. Cl.: G01N 27/406

(54) **Procédé de commande du chauffage d'un capteur électrochimique pour l'analyse des gaz d'échappement d'un moteur à combustion de véhicule**
Verfahren zur Heizregelung eines elektrochemischen Sensors zur Abgasanalyse eines Verbrennungsmotors von einem Fahrzeug
Method for the heatingcontrol of an electrochemical sensor for the exhaust gas analysis of and combustion engine of a vehicle

(30) Priorité: 29.04.1999 FR 9905475
(43) Date de publication de la demande: 02.11.2000
(73) Titulaire: RENAULT S.A.S., 92100 Boulogne Billancourt (FR)
(72) Inventeur: Aimard, Frédéric, 91150 Etampes (FR); Col, Gabriel, 75015 Paris (FR); Neyrat, Pierre, 91290 La Norville (FR); Albouy, Hugues, 92000 Nanterre (FR); Dionnet, Bernard, 91150 Morigny (FR)

(56) Documents cités:
- EP-A- 0 695 983
- FR-A- 2 735 866
- US-A- 4 938 861
- US-A- 5 134 080
- US-A- 5 696 313

## Description

La présente invention concerne un capteur électrochimique pour l'analyse des gaz d'échappement d'un moteur à combustion équipant notamment un véhicule automobile.

L'invention concerne plus particulièrement les capteurs électrochimiques comportant au moins un élément de chauffage de l'élément interne sensible du capteur, qui fournissent des informations représentatives de la composition physique et/ou chimique des gaz d'échappement et qui sont utilisés en vue par exemple d'assurer le contrôle du moteur et/ou d'un autre organe associé, en vue de permettre des fonctions de diagnostic ou pour la mise en oeuvre de moyens de dépollution des gaz d'échappement.

Quelle que soit l'application envisagée, par exemple pour le diagnostic des catalyseurs d'oxydoréduction, d'oxydation, de réduction ou de stockage, on utilise un ou plusieurs capteur dont la partie sensible est placée dans un conduit dans lequel circulent les gaz d'échappement afin d'être traversée par ces gaz.

Un tel capteur électrochimique comporte généralement au moins une cellule de mesure, comprenant deux électrodes et un électrolyte, qui est associée à un élément de chauffage. En effet, les performances optimales théoriques du capteur sont obtenues pour une température spécifique de fonctionnement dépendant de la nature des composants de la cellule électrochimique.

Si la température de chauffage du capteur est trop basse, ils se produit un phénomène de dérive thermique et de perte des performances.

Si la température de fonctionnement est inférieure à celle des gaz d'échappement, on constate que l'empoisonnement et l'encrassement du capteur devienne très important.

Enfin, si la température de fonctionnement est trop élevée, on constate à nouveau une dégradation des performances du capteur et les dégradations de ses matériaux constitutifs sont accélérées.

En effet, du fait de son agencement dans le flux des gaz d'échappement, le capteur est soumis à des phénomènes d'empoisonnement et d'encrassement. Il en résulte un mauvais fonctionnement du capteur, c'est-à-dire une dégradation de ses performances. Le document US 4,938,861 décrit un tel capteur. Afin de nettoyer le capteur, et d'éviter un effet de saturation, il est porté à une température élevée pendant quelques minutes.

L'invention a pour but de proposer un procédé de commande du chauffage d'un capteur du type mentionné précédemment qui permet de protéger le capteur, ou sonde, contre l'empoisonnement et l'encrassement en adaptant la température de l'élément interne sensible, notamment en fonction de la température des gaz d'échappement.

Dans ce but, l'invention propose un procédé commande du chauffage d'un capteur électrochimique pour l'analyse des gaz d'échappement d'un moteur à combustion de véhicule, notamment du type comportant au moins une cellule de mesure comprenant deux électrodes et un électrolyte et qui est associée à un élément de chauffage, caractérisé en ce qu'il comporte :
- au moins un premier mode de chauffage du capteur à une première température d'utilisation du capteur, notamment à une température optimale de fonctionnement du capteur ;
- et au moins un deuxième mode distinct de chauffage du capteur à une deuxième température qui est supérieure à la première température d'utilisation et à la température des gaz à analyser, en vue de prévenir l'empoisonnement et/ou l'encrassement du capteur.

Selon d'autres caractéristiques du procédé :
- il comporte au moins un troisième mode distinct de chauffage à une troisième température, notamment supérieure à la deuxième température de prévention, en vue de décrasser le capteur pour lui restituer ses performances préalablement altérées ;
- un mode de chauffage peut être mis en oeuvre à des températures différentes ;
- le chauffage du capteur selon lesdits modes distincts de chauffage est effectué selon au moins un cycle prédéterminé de chauffage en fonction des conditions de fonctionnement et/ou d'utilisation du capteur.

D'autres caractéristiques et avantages de l'invention apparaîtront à la lecture de la description détaillée qui la suivre pour la compréhension de laquelle on se rapportera aux dessins annexés dans lesquels :
- la figure 1 est une vue schématique en coupe transversale d'un premier exemple d'un capteur électrochimique de type potentiométrique ;
- la figure 2 est une vue schématique en coupe transversale selon un autre plan du capteur électrochimique de la figure précédente ;
- les figures 3 et 4 sont des vues similaires à celles des figures 1 et 2 qui illustrent un exemple d'un capteur de type ampèremètrique ;
- les figures 5 et 6 sont des vues similaires à celles des figures 1 et 2 qui illustrent un exemple d'un capteur de type résistif ; et
- la figure 7 est un diagramme illustrant la courbe de réponse électrique d'un capteur potentiométrique, en fonction de la concentration du gaz à mesurer, pour différents états du capteur.

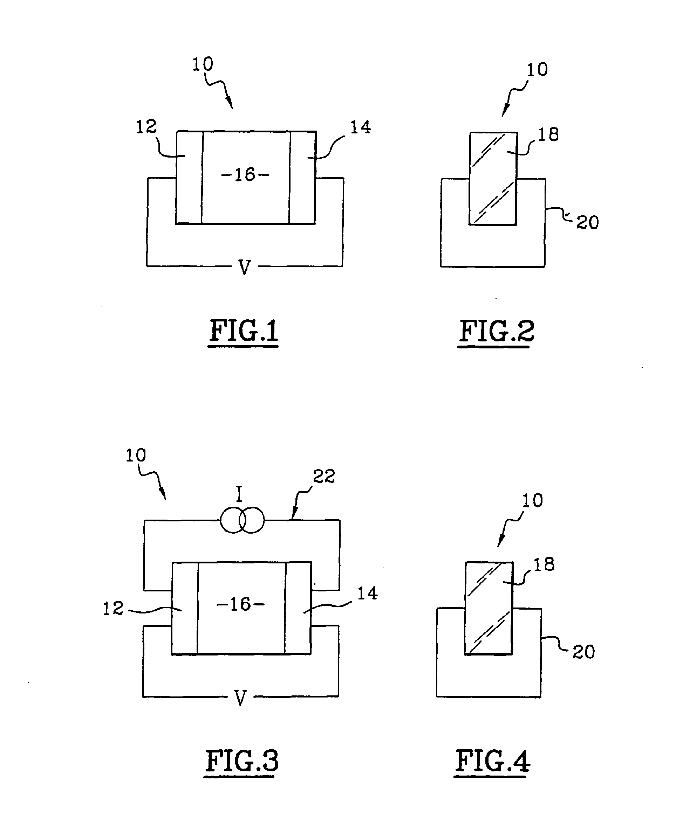

Le capteur 10 représenté schématiquement aux figures 1 et 2 comporte une cellule comprenant notamment deux électrodes 12 et 14 qui entourent une électrode centrale solide 16. L'électrode 12 est par exemple l'électrode de référence soumise à l'air ou à un gaz et l'électrode 14 est l'électrode de mesure soumise au gaz dont on désire par exemple mesurer la concentration.

Comme le montre la figure schématique 2, le capteur 10 comporte aussi un élément de chauffage 18 qui est par exemple une résistance électrique alimentée, par un circuit commandé d'alimentation 20 non représenté en détail.

L'élément de chauffage 18 est ainsi par exemple une résistance de platine dont l'alimentation est , dans l'état de la technique, pilotée en tension ou en courant de manière continue ou selon un cycle déterminé d'alimentation.

Selon différentes conceptions de l'état de la technique, le pilotage du chauffage correspond à un compromis fonctionnel visant notamment à maîtriser le vieillissement du capteur pour en obtenir un fonctionnement satisfaisant du point de vue de ses performances pendant une durée de vie déterminée, ce compromis aboutissant au choix d'un mode unique de chauffage.

Le capteur de type potentiométrique représenté à la figure 1 fournit une force électromotrice (fem) V représentative de la concentration du gaz à mesurer.

Le capteur 10 illustré aux figures 1 et 2 est par exemple un capteur du type de ceux utilisés dans les sondes à oxygène (LAMBDA, ou en tout ou rien (UEGO ou HEGO)).

Dans le cas du capteur ampèremètrique 10 représenté aux figures 3 et 4, un courant I dit de "pompage" est fourni par un système externe 22 en fonction des espèces chimiques à mesurer. Ce type de capteur est par exemple utilisé dans les sondes à oxygène proportionnelles (UEGO).

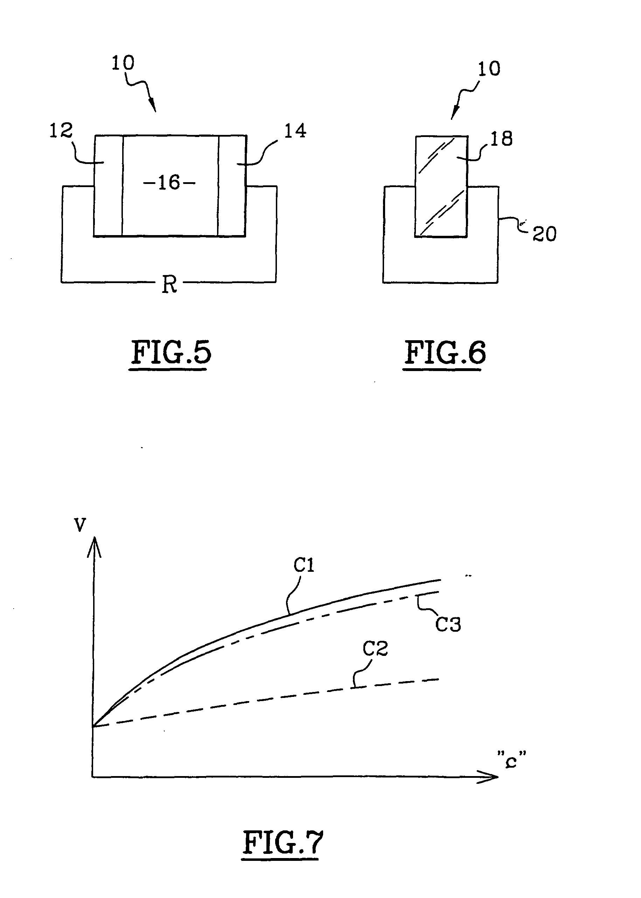

Le troisième type de capteur 10 représenté aux figures 5 et 6 est du type résistif, c'est-à-dire que l'on mesure la résistance R aux bornes des électrodes 12 et 14 dont la valeur représente la variation de la concentration de l'espèce chimique à mesurer. Un tel type de capteur et par exemple utilisé dans les sondes à oxygène TiO₂.

Quel que soit le type de cellule, potentiométrique, ampèremètrique ou résistif, chaque cellule délivre un signal électrique qui est caractéristique notamment de la pression partielle ou des éléments chimiques recherchés.

Ainsi, par exemple, une sonde à oxygène du type tout ou rien fourni une tension de sortie V qui est fonction de la pression partielle en oxygène tandis que, dans le cas d'un capteur de gaz d'hydrocarbures (HC), elle est fonction de la pression partielle d'hydrocarbures.

D'une manière générale, tous ces capteurs sont sensibles aux phénomènes d'empoisonnement du capteur résultant de combinaisons chimiques, d'adsorption, etc..

Ils sont aussi sensibles aux phénomènes d'encrassement résultant notamment de dépôts sur les éléments sensibles.

Ces phénomènes d'empoisonnement et d'encrassement aboutissent à une dégradation du signal électrique fourni par le capteur.

Cette dégradation est représentée de manière schématique à la figure 7 sur laquelle la courbe C1 représente la réponse électrique V d'un capteur potentiométrique neuf en fonction de la concentration "c" du gaz à mesurer, tandis que la courbe C2 représente la réponse du capteur après une utilisation ayant abouti à son empoisonnement et/ou son encrassement.

Ces dégradations modifient chimiquement ou physiquement les électrodes, les électrolytes et les différents passages des gaz (passage de diffusion ou couches de protection).

Conformément aux enseignements de l'invention, il est proposé de commander le chauffage du capteur 10 selon un procédé de commande qui permet de protéger la sonde contre l'empoisonnement et l'encrassement en adaptant la température T de son élément interne sensible à la température Tg des gaz auxquels il est soumis.

L'invention propose ainsi de contrôler le chauffage selon au moins deux modes distincts de chauffage.

Le premier mode M1 de chauffage du capteur, par exemple au moyen de la résistance 18, consiste à choisir une première température déterminée T1 de chauffage qui correspond à une température optimale de fonctionnement du capteur du point de vue fonctionnel, c'est-à-dire à une température T1 qui optimise sa sensibilité, sa stabilité, son temps de réponse et qui réduit la dispersion des mesures.

Le deuxième mode distinct M2 de chauffage du capteur, par exemple au moyen de la résistance 18, consiste à choisir une deuxième température déterminée T2 de chauffage qui permet de prévenir les phénomènes d'empoisonnement et d'encrassement du capteur. Cette deuxième température de chauffage T2 pour le deuxième mode de chauffage est nettement supérieure à la température Tg des gaz à mesurer. Toutefois, elle doit bien entendu être compatible avec les préconisations d'emploi du capteur et elle ne doit pas affecter sa fiabilité, ni sa durée de vie.

Le procédé de chauffage contrôlé du capteur selon l'invention peut aussi comporter un troisième mode distinct M3 de chauffage, par exemple au moyen de la résistance 18 pour restituer au capteur 10 ses performances préalablement altérées par les phénomènes d'empoisonnement et/ou d'encrassement qui peuvent intervenir notamment lors du fonctionnement selon le premier mode de chauffage M1.

Ce troisième mode M3 de chauffage est effectué à une troisième température déterminé T3 de chauffage qui est notamment généralement supérieure à la deuxième température T2 de prévention de l'empoisonnement et/ou de l'encrassement.

On a représenté à la figure 7, la courbe C3 de réponse du capteur après qu'il ait été soumis à un fonctionnement comportant un troisième mode M3 de chauffage en vue de son décrassage, les performances en réponse du capteur étant alors très proches des performances du capteur neuf illustrées par la courbe C1.

Les différents modes de chauffage contrôlé du capteur peuvent être sélectionnés selon un enchaînement séquentiel déterminé à chaque instant en fonction notamment du besoin le plus urgent ou le plus nécessaire, ce besoin étant analysé et déterminé par l'unité électronique (non représentée) de commande du capteur.

Pour chacun des modes distincts Mi de chauffage, il est aussi possible de faire varier la température déterminée correspondante Ti de chauffage au sein d'un même cycle ou au cours de différents cycles. De même, l'unité électronique de commande détermine et pilote la durée de chaque mode distinct de chauffage et l'enchaînement séquentiel des modes Mi.

## Revendications

1. Procédé de commande du chauffage d'un capteur électrochimique (10) pour l'analyse des gaz d'échappement d'un moteur à combustion de véhicule, qui est notamment du type comportant au moins une cellule de mesure comprenant deux électrodes (14, 16) et un électrolyte, et qui est associée à un élément de chauffage (18), comportant :
- au moins un premier mode (M1) de chauffage du capteur (10) à une première température (T1) d'utilisation du capteur, notamment à une température optimale de fonctionnement du capteur ; et **caractérisé en ce qu'**il comporte :
- au moins un deuxième mode (M2) distinct de chauffage du capteur à une deuxième température (T2) qui est supérieure à la première température (T1) d'utilisation et à la température (Tg) des gaz à analyser, en vue de prévenir l'empoisonnement et/ou l'encrassement du capteur ;
- et au moins un troisième mode (M3) distinct de chauffage à une troisième température (T3) supérieure à la deuxième température (T2) de prévention, en vue de décrasser le capteur (10) pour lui restituer ses performances préalablement altérées par dégradation du signal électrique fourni par le capteur.

2. Procédé selon l'une quelconque des revendications précédentes, **caractérisé en ce qu'**un mode de chauffage (Mi) peut être mis en oeuvre à des températures (Ti) différentes

3. Procédé selon l'une quelconque des revendications précédentes, **caractérisé en ce que** le chauffage du capteur (10) selon lesdits modes distincts (Mi) de chauffage est effectué selon au moins un cycle prédéterminé de chauffage en fonction des conditions de fonctionnement et/ou d'utilisation du capteur.

## Claims

1. Method for controlling the heating of an electrochemical sensor (10) for the analysis of exhaust gases from a combustion engine of a vehicle, which is in particular of the type comprising at least one measurement cell comprising two electrodes (14, 16) and an electrolyte, and which is associated with a heating element (18) comprising:
- at least a first mode (M1) of heating the sensor (10) to a first operating temperature (T1) of the sensor, in particular to an optimal working temperature of the sensor, and **characterized in that** it comprises:
- at least a second distinct mode (M2) of heating the sensor to a second temperature (T2) which is higher than the first operating temperature (T1) and to the temperature (Tg) of the gases to be analysed, with a view to preventing poisoning and/or contamination of the sensor; and
- at least a third distinct mode (M3) of heating to a third temperature (T3) higher than the second preventative temperature (T2), with a view to cleaning the sensor (10) in order to restore its performance, previously altered by deterioration of the electrical signal provided by the sensor.

2. Method according to any one of the preceding claims, **characterized in that** a heating mode (Mi) may be employed at different temperatures (Ti).

3. Method according to any one of the preceding claims, **characterized in that** the heating of the sensor (10) according to said distinct heating modes (Mi) is carried out according to at least one predetermined heating cycle depending on the working conditions and/or the use of the sensor.

## Patentansprüche

1. Verfahren zum Steuern des Heizens eines elektrochemischen Sensors (10) für die Analyse der Abgase einer Brennkraftmaschine, der insbesondere von dem Typ ist, der wenigstens eine Messzelle aufweist, die zwei Elektroden (14, 16) und einen Elektrolyten enthält, und dem ein Heizelement (18) zugeordnet ist, wobei das Verfahren enthält:
- wenigstens eine erste Betriebsart (M1) zum Heizen des Sensors (10) auf eine erste Temperatur (T1) für den Gebrauch des Sensors, insbesondere auf eine optimale Betriebstemperatur des Sensors; und
**dadurch gekennzeichnet, dass** es enthält:
- wenigstens eine zweite, andere Betriebsart (M2) zum Heizen des Sensors auf eine zweite Temperatur (T2), die höher als die erste Gebrauchstemperatur (T1) ist, und auf die Temperatur (Tg) der zu analysierenden Gase, um die Vergiftung und/oder die Verschmutzung des Sensors zu verhindern,
- und wenigstens eine dritte, andere Betriebsart (M3) zum Heizen auf eine dritte Temperatur (T3), die höher als die zweite Verhinderungstemperatur (T2) ist, um den Sensor (10) von Verschmutzungen zu reinigen, um seine Leistungsfähigkeit wiederherzustellen, die sich vorher durch Verschlechterung des von dem Sensor gelieferten elektrischen Signals verschlechtert hat.

2. Verfahren nach einem der vorhergehenden Ansprüche, **dadurch gekennzeichnet, dass** eine Heizbetriebsart (Mi) für unterschiedliche Temperaturen (Ti) ausgeführt werden kann.

3. Verfahren nach einem der vorhergehenden Ansprüche, **dadurch gekennzeichnet, dass** das Heizen des Sensors (10) gemäß den verschiedenen Heizbetriebsarten (Mi) in einem vorgegebenen Heizzyklus als Funktion der Betriebsbedingungen und/oder der Gebrauchsbedingungen des Sensors ausgeführt wird.
